Europäisches Patentamt

European Patent Office

Office européen des brevets

(19)

(11) Veröffentlichungsnummer: **0 111 298**
**B1**

(12) # EUROPÄISCHE PATENTSCHRIFT

(45) Veröffentlichungstag der Patentschrift:
**30.04.86**

(21) Anmeldenummer: **83112279.1**

(22) Anmeldetag: **07.12.83**

(51) Int. Cl.⁴: **C 05 G 3/00,** C 05 G 3/06,
A 01 C 21/00

(54) **Düngemittelsprays.**

(30) Priorität: **10.12.82 DE 3245735**

(43) Veröffentlichungstag der Anmeldung:
**20.06.84 Patentblatt 84/25**

(45) Bekanntmachung des Hinweises auf die Patenterteilung:
**30.04.86 Patentblatt 86/18**

(84) Benannte Vertragsstaaten:
**AT BE CH DE FR GB IT LI NL SE**

(56) Entgegenhaltungen:
**AU - B - 515 436**

(73) Patentinhaber: **HOECHST AKTIENGESELLSCHAFT,**
**Postfach 80 03 20, D-6230 Frankfurt am Main 80 (DE)**

(72) Erfinder: **Frisch, Gerhard, Dr., Westerwaldstrasse 7,**
**D-6393 Wehrheim (DE)**

**Beschreibung**

Düngemittelsprays sind zur direkten Blattdüngung von Pflanzen geeignet. Die direkte Nährstoffversorgung über die Blätter erzeugt ein besonders kräftiges Wachstum und bewirkt ein frisches lebhaftes Aussehen der Pflanze. Es ergeben sich somit insbesondere bei der Anwendung zur Düngung von Zierpflanzen Vorteile, da die äußere Erscheinung der Pflanze hier eine besondere Rolle spielt.

Düngemittelsprays sind bereits aus der australischen Patentschrift 515 436 bekannt. Diese besitzen jedoch Nachteile bei der Anwendung; insbesondere besitzen diese dort angeführten Düngemittelformulierungen niedrige Stabilitäten.

Gegenstand der vorliegenden Erfindung sind daher Düngemittel zum Versprühen in Form von Aerosolen bzw. Sprays bestehend aus einer wäßrigen, die Pflanzennährstoffe enthaltenden Phase, einer organischen, nicht phytotoxische organische Lösungsmittel enthaltenden Phase, und einem Treibmittel, dadurch gekennzeichnet, daß sie ein oder mehrere $(C_2-C_{12})$-Alkanpolyole sowie ein oder mehrere oberflächenaktive Substanzen und quellfähige Aluminium-Silikate enthalten. Zusätzlich kann noch ein Entschäumer beispielsweise ein Entschäumer auf Silikonbasis wie der Entschäumer SE 2 der Firma Wacker Chemie zugegeben werden.

Das erfindungsgemäße Düngemittel kann hierbei als Öl-in-Wasser oder Wasser-in-Öl-Emulsion vorliegen.

Als $(C_2-C_{12})$-Alkanpolyole kommen insbesondere $(C_2-C_3)$-Alkandiole oder $(C_3-C_5)$Alkantriole in Betracht, bevorzugt Äthylenglykol und Glycerin. Diese besitzen eine hohe Pflanzenverträglichkeit und bewirken einen zusätzlichen Blattglanzeffekt.

Die erfindungsgemäß einzusetzenden oberflächenaktiven Substanzen sind Poly$(C_2-C_3)$-alkylenglykole, Poly$(C_2-C_3)$-alkylenglykol-mono$(C_1-C_{10})$alkyl- ether wie Polypropylenglykol-monobutylether, gegebenenfalls ethoxylierte $(C_8-C_{12})$-Alkylphenole, Kondensationsprodukte aus gegebenenfalls alkylierten Phenolen, wie Phenol, Kresol mit Formaldehyd und/oder Bisulfitsalzen, wie Natrium- oder Kaliumbisulfit, $(C_6-C_{18})$Alkylsulfonsäuren, ethoxylierte Ölsäuren, wie ethoxyliertes Ricinusöl, insbesondere die Produkte der [R]Emulsogen EL-Reihe der Firma Hoechst AG, ggf. ethoxylierte Sorbitan-Monooleate wie die [R]Tween und [R]Span-Typen der Firma Atlas Chemie, insbesondere [R]Tween 80 (polyethoxyliertes Sorbitan Monooleat) und [R]Span 80 (Sorbitan Monooleat) oder Gemische von anionaktiven Tensiden mit nichtionogenen Tensiden wie die [R]Atlas-Typen der Atlas-Chemie, insbesondere [R]Atlas 4856.

Bevorzugt unter diesen sind Polyethylenglykole, Polypropylenglykolmonobutylether, die ggf. ethoxylierten Sorbitan Monooleate und Mischungen von anionaktiven Tensiden mit nichtionogenen Tensiden.

Für die organische Phase finden als organische Lösungsmittel $(C_{10}-C_{14})$Paraffine, hochsiedende Petroleumfraktionen mit niedrigem Aromatengehalt, wie [R]BP-n Paraffin, Isopar G (Kp: 155°-173°C), Isopar H (Kp: 173-190°C) oder Essobayol 90 (Kp: 255°-380°C) und auch pflanzliche Öle wie Ricinusöl, Sonnenblumenöl, Baumwollsaatöl oder Erdnußöl Verwendung.

Als Aluminium-Silikate werden quellfähige Mineralien vom Bentonit-Typ wie die Handelsprodukte [R]Bentone 34, [R]Bentone 27 oder [R]Baragel der Firma Kronos-Titan GmbH eingesetzt. Diese werden der organischen und/oder, anorganischen Phase zugegeben und verleihen dem erfindungs-gemäßen Düngemittel eine besondere Stabilität.

Als Pflanzennährstoffe können prinzipiell alle herkömmlichen wasserlöslichen Düngemittel organischer oder anorganischer Natur eingesetzt werden. Die spezifische Kombination an Nährstoffen kann je nach dem Zweck des zu verwendenden Düngemittelsprays variiert werden. So können beispielsweise Düngemittel auf Basis spezieller Spurenelemente wie Eisen, Mangan, Kupfer, Zink, Bor, Molybdän eingesetzt werden. Es können handelsübliche fertige Düngemittellösungen verwendet werden wie solche der [R]Complesal fluid-Reihe der Firma Hoechst AG. Beispielsweise enthalten solche Lösungen-Salze der Elemente Stickstoff, Phosphor, Kalium und der Spurenelemente Eisen, Kupfer, Zink, Magnesium, Molybdän, Mangan, Kobalt und Bor bei einem Stickstoffgehalt von 3 bis 26 Gew.-%, einem Phosphorgehalt von 2 bis 12 Gew.-% und einem von Kaliumgehalt von 4 bis 10 Gew.-%.

Als Treibmittel können prinzipiell die üblichen Mittel verwendet werden wie bspw. Propan-Butan-Gemische, Fluorkohlenwasserstoffe, Dimethylether und Stickstoff, insbesondere jedoch werden Propan-Butan-Gemische benutzt, wobei das Verhältnis Propan zu Butan im Bereich von 5:95 bis 25:75 liegt.

Der Spraydoseninnendruck kann zwischen 0,1 und 12 bar betragen.

Die erfindungsgemäßen Mittel sind weiterhin dadurch gekennzeichnet, daß sie 20 bis 40 Gew.-%, insbesondere 25 bis 35 Gew.-%, besonders bevorzugt 33 bis 37 Gew.-% Wasser, 2 bis 20 Gew.-%, insbesondere 2 - 10 Gew.-% Lösungsmittel, 30-60 Gew.-% insbesondere 35-47 Gew.-% Treibmittel, 0,1 bis 15 Gew.-%, insbesondere 0,2 bis 11 Gew.-% oberflächenaktive Substanzen + $(C_2-C_{12})$Alkanpolyol, 0,001 bis 5 Gew.-%, insbesondere 0,01 bis 3 Gew.-%, besonders bevorzugt 0,05 bis 0,5 Gew.-% Aluminium-Silikat und 0,05 bis 8 Gew.-% Pflanzennährstoffe enthalten.

Gegenstand der vorliegenden Erfindung ist auch ein Verfahren zur Herstellung des oben beschriebenen Düngemittels, dadurch gekennzeichnet, daß man die wäßrige Phase mit der organischen Phase unter Zusatz von Aluminium-Silikaten unter Aufwendung von hohen Scherkräften im Bereich von 10 bis 7000

sec[-1] insbesondere im Bereich von 50-2000 sec[-1] verrührt und anschließend das Treibmittel hinzugibt.

Zum Verrühren verwendet man zweckmäßigerweise einen hochtourigen Turbulenzrührer. Vorteilhaft wird die organische Phase zuerst mit dem Aluminium-Silikat vermischt und an-schließend unter heftigem Rühren die wäßrige Phase zugegeben. Es wird solange gerührt bis eine deutlich sichtbare Phasenumkehr der Emulsion Öl-in-Wasser zu einer Emulsion Wasser-in-Öl eintritt. Die Masse wird hierbei, aus einem niederviskosen in einen höherviskosen, cremigen Zustand überführt. Die erfindungsgemäßen Alkanpolyole und oberflächenaktive Substanzen können vor dem beschriebenen Mischungsprozeß der wäßrigen und/oder organischen Phase zugegeben werden. Die entstandene Wasser-in-Öl-Emulsion besitzt eine hervorragende Stabilität.

Nach kurzem Nachrühren wird die so hergestellte Düngerformulierung in handelsübliche innenlackierte Sprühdosen abgefüllt. Es werden handelsübliche Ventilesysteme verwendet, vorzugsweise solche, bei denen das Treibgas über den Ventilkopf in die Sprühdose eingefüllt werden kann. Besonders geeignet ist das Ventilsystem (R)Aquasol der Deutschen Präzisions-Ventil GmbH.

Die so hergestellten erfindungsgemäßen Düngemittelformulierungen weisen überraschend hohe Lagerstabilitäten im Temperaturbereich von 0° bis +50°C auf. Die Tatsache, daß bei der Lagerung keine Phasentrennung auftritt,ist von großem anwendungstechnischem Vorteil; hierdurch wird u.a. eine sehr gleichmäßige Verteilung des Düngemittels auf der Blattoberfläche gewährleistet.

Die erfindungsgemäße Zusammensetzung der Düngemittelformulierung läßt sich besonders fein zerstäuben. Somit wird eine sehr gute Verteilung des Düngers auf der Oberfläche der Pflanze erreicht. Die Düngemittelwirkung tritt sehr rasch ein, da der Dünger sehr leicht in die Pflanze eindringt. Rückstände auf der Pflanzenoberfläche sind nicht zu beobachten.

Den erfindungsgemäßen Mitteln können organische Zusatzstoffe wie Blattglanzmittel, Antioxidantien, Duftstoffe oder auch Pestizide hinzugegeben werden, ohne daß deren vorteilhafte Eigenschaften verloren gehen.

Die nachstehend beispielhaft angeführten Zusammensetzungen erfindungsgemäßer Mittel dienen zur Erläuterung der Erfindung, ohne diese einzuschränken.

**Beispiele 1-9    Allgemeine Herstellungsvorschrift**

Ein Gemisch aus oberflächenaktiver Substanz (ca. Hälfte der Gesamtmenge) Aluminium-Silikat und dem organischen Lösungsmittel, wurde in einem Gefäß durch Rühren homogenisiert. Das Gemisch (organische Phase) wurde noch ca. 15 Minuten nachgerührt.

In einem zweiten Behälter wurde durch aufeinanderfolgendes, Einrühren von oberflächenaktiver Substanz (ca. Hälfte der Gesamtmenge), $(C_2-C_{12})$Alkanpolyol, (R)Complesal-fluid-Nährstoff und Entschäumer in die entsprechende Menge Wasser die wäßrige Phase hergestellt.

Die organische Phase wurde der wäßrigen Phase unter mäßigem Rühren zugesetzt. Anschließend wurden beide Phasen mit einem Turbulenzrührer so heftig miteinander vermischt, bis aus der Öl-in-Wasser Emulsion eine Wasser-in-Öl-Emulsion entstand. Sobald die Kontrollprobe keine Phasentrennung mehr beim Stehenlassen zeigte, wurde der Rührvorgang beendet.

Das erhaltene Konzentrat wurde in Spraydosen gegeben und das Treibmittel eingefüllt.

Die einzelnen Komponenten und ihre Mengenverhältnisse sind nachstehend aufgeführt.

**Beispiel 1** 2 % Nährsalzlösung [1)]
1 % (R) Atlox 4856
2 % Entschäumer SE 2 [2)]
2 % Glyzerin
0,1 % Bentone 34
42,9 % Wasser
40 % Treibgas [3)]
10 % Isopar H

**Beispiel 2**
2,0 % Nährsalzlösung [1)]
1,0 % (R)Atlox 4S56
2,0 % Entschäumer SE 2 [2)]
2,0 % Glyzerin
10,0 % (R)Isopar H
0,1 % (R)Baragel
42,9 % Wasser
40,0 % Treibgas

**Beispiel 3**
2,0 %-Nährsalzlösung [1)]
1,0 % (R)Span 80
2,0 % Entschäumer SE 2 [2)]
2,0 % Glyzerin
10,0 % (R)Essobayol 90
0,1 % (R)Baragel
42,9 % Wasser
40,0 % Treibgas [3)]

**Beispiel 4**
2,0 % Nährsalzlösung
1,0 % (R)Span 80
2,0 % Entschäumer SE 2 [2)]
2,0 % Glyzerin
10,0 [R] Isopar II
0,1 % (R)Bentone 34
42,9 % Wasser
40,0 % Treibgas [3)]

**Beispiel 5**
2,0 % Nährsalzlösung [1)] 1,0 %(R)Span 80. 2,0 % Entschäumer SE 2 [2)] 2,0 % Glyzerin
10,0 % (R)Isopar H
0,1 % (R)Baragel
42,9 % Wasser
40,0 % Treibgas [3)]

**Beispiel 6**
2,0 % Nährsalzlösung [1)] 1,0 % (R)Span 80
2,0 % Glyzerin
10,0 % (R)Isopar H
0,1 % (R)Bentone 34

44,9 % Wasser
40,0 % Treibgas [3]

**Beispiel 7**

2,0 % Nährsalzlösung [1] 1,0 % (R)Span 80
2,0 % Entschäumer SE 2 [2] 2,0 % Glyzerin
10,0 % (R)Isopar G
0,1 % R)Bentone 27 42,9 % Wasser
40,0 % Treibgas [3]

**Beispiel 8**

8,0 % Nährsalzlösung [1]
2,0 % (R)Span 80
2,0 % Entschäumer SE 2 [2]
2,0 % Glycerin
10,0 % (R)Isopar H
0,1 % R)Bentone 34
35,9 % Wasser
40,0 % Treibgas [3]

**Beispiel 9**

0,5 % Nährsalzlösung [1].
1,0 % (R)Span 80
2,0 % Entschäumer SE 2 [2]
2,0 % Glycerin
10,0 % (R)Isopar H
3,0 % (R)Bentone 34
41,5 % Wasser
40,0 % Treibgas [3]

**Beispiel 10**

1,6 % Nährsalzlösung
0,9 % (R)Span 80
1,6 % Entschäumer SE 2
1,6 % Glycerin
3,0 % Polypropylenglykolmonobutylether
5,7 % Polyethylenglykol
8,2 %(R) Isopar H
0,1 % Bentone 34
34,3 % Wasser
43,0 % Treibgas

1) Als Nährsalzlösung wurde alternativ eines der folgenden Handelsprodukte eingesetzt, wobei die Ziffern den N-P-K%-Gehalt wiedergeben:

(R)Complesal-fluid 12-4-6,(R)Complesal fluid 8-8-6,

(R)Complesal fluid 11-8-5,(R)Complesal fluid 6-12-6,

(R)Complesal fluid 5-8-10,(R)Complesal fluid N-34.

2) Entschäumer auf Silkon-Basis der Firma Wacker

3) Butan-Propan Gemisch Gew.-Verhältnis 85:15.

In den Rezepturen der Beispiele 1-10 kann der Entschäumer auch durch Wasser substituiert werden, ohne daß die erfindungswesentlichen Eigenschaften verloren gehen.

Die Prozentangaben sind Gewichtsprozente.

## Patentansprüche

1. Düngemittel zum Versprühen in Form von Aerosolen bzw. Sprays bestehend aus einer wäßrigen, die Pflanzennährstoffe enthaltenden Phase, einer organischen, nicht phytotoxische organische Lösungsmittel enthaltenden Phase und einem Treibmittel, dadurch gekennzeichnet, daß sie ein oder mehrere $(C_2-C_{12})$-Alkan-polyole sowie ein oder mehrere oberflächenaktive Substanzen und quellfähige Aluminium-Silikate enthalten.

2. Düngemittel gemäß Anspruch 1, dadurch gekennzeichnet, daß sie $(C_2-C_3)$-Alkandiole oder $(C_3-C_5)$Alkantriole enthalten.

3. Düngemittel gemäß Anspruch 1, dadurch gekennzeichnet, daß sie als oberflächenaktive Substanzen gegebenenfalls ethoxylierte $(C_8-C_{12})$-Alkylphenole, Kondensationsprodukte aus gegebenenfalls alkylierten Phenolen mit Formaldehyd und/oder Bisulfitsalzen, $(C_6-C_{18})$-Alkylsulfonsäuren, ethoxylierte Ölsäuren, gegebenenfalls ethoxylierte Sorbitan-Monooleate, Gemische von anionaktiven Tensiden mit nicht-ionogenen Tensiden, Poly $(C_2-C_3)$alkylenglykole oder Poly $(C_2-C_3)$alkylenglykol-mono-$(C_1-C_{10})$ alkylether enthalten.

4. Düngemittel gemäß Ansprüchen 1 bis 3, dadurch gekennzeichnet, daß als Aluminium-Silikate Mineralien vom Typ der Bentonite eingesetzt werden.

5. Düngemittel gemäß Ansprüchen 1 bis 4, dadürch gekennzeichnet, daß als organische Lösungsmittel $(C_{10}-C_{14})$-Paraffine, Petroleumfraktionen mit niedrigem Aromatengehalt, pflanzliche Öle oder Gemische derselben eingesetzt werden.

6. Düngemittel gemäß Ansprüchen 1 bis 5, dadurch gekennzeichnet, daß als Treibmittel ein Gemisch aus Propan und Butan verwendet wird.

7. Düngemittel gemäß Ansprüchen 1 bis 6, dadurch gekennzeichnet, daß sie 20 bis 40 Gew -% Wasser, 2 bis 20 Gew.-% Lösungsmittel, 30 bis 60 Gew.-% Treibmittel, 0,1 bis 15 Gew.-% oberflächenaktive Substanzen + $(C_2-C_{12})$Alkanpolyol, 0,001 bis 5 Gew.-% Aluminium-Silikat und 0,05 bis 8 Gew.-% Pflanzennährstoffe enthalten.

8. Verfahren zur Herstellung von Düngemitteln gemäß Ansprüchen 1 bis 7 dadurch gekennzeichnet, daß man die wäßrige phase mit der organischen Phase unter Zusatz von Aluminium-Silikaten unter,Aufwendung von Scherkräften im Bereich von 10 bis 7.000 sec $^{-1}$ miteinander verrührt und anschließend das Treibmittel hinzugibt.

9. Verfahren zum Düngen von Pflanzen, dadurch gekennzeichnet, daß man auf die Pflanzen bzw. die Pflanzenteile ein Düngemittel gemäß Ansprüchen 1 bis 8 aufsprüht.

## Revendications

1. Engrais à pulvériser, sous forme d'aerosols (pulverisations ou atomisations), qui comprennent une phase aqueuse contenant les éléments nutritifs pour la plante, une phase organique contenant un solvant organique non phytotoxique, et un propulseur, engrais caractérisés en ce qu'ils contiennent un ou plusieurs alcane-polyols en $C_2-C_{12}$, ainsi que un

ou plusieurs agents surfactifs et des silicates d'aluminium pouvant gonfler.

2. Engrais selon la revendication 1, caractérisés en ce qu'ils contiennent des alcane-diols en $C_2$-$C_3$ ou des alcanes-triols en $C_3$-$C_5$.

3. Engrais selon la revendication 1, caractérisés en ce qu'ils contiennent comme agents surfactifs des alkylphénols en $C_8$-$C_{12}$ éventuellement éthoxylés, des produits de condensation de phénols éventuellement alkylés avec le formaldéhyde et/ou des bisulfites minéraux, des acides alkylsulfoniques en $C_6$-$C_{18}$, des huiles éthoxylées, du monooléate de sorbitanne éventuellement éthoxylé, des mélanges d'agents tensio-actifs anioniques et d'agents tensio-actifs non ionogènes, des poly($C_2$-$C_3$)alkylèneglycols ou des éthers monoalkyliques en $C_1$-$C_{10}$ de ces polyalkylèneglycols.

4. Engrais selon l'une quelconque des revendications 1 à 3, caractérisés en ce qu'ils contiennent comme silicates d'aluminium des matières minérales du genre des bentonites.

5. Engrais selon l'une quelconque des revendications 1 à 4, caractérisés en ce qu'ils contiennent comme solvants organiques des paraffines en $C_{10}$-$C_{14}$, des fractions de pétrole à faible teneur en aromatiques, des huiles végétales ou des mélanges de ces matières.

6. Engrais selon l'une quelconque des revendications 1 à 5, caractérisés en ce qu'ils contiennent comme propulseur un mélange de propane et de butane.

7. Engrais selon l'une quelconque des revendications 1 à 6, caractérisés en ce qu'ils contiennent 20 à 40 % en poids d'eau 2 à 20 % en poids de solvant, 30 à 60 % en poids du propulseur, 0,1 à 15 % en poids des agents surfactifs et de l'alcane-polyol en $C_2$-$C_{12}$, et 0,001 a 5 % en poids du silicate d'aluminium et 0,005 à 8 % en poids d'éléments nutritifs pour les plantes.

8. Procédé de préparation d'engrais selon l'une quelconque des revendications 1 à 7, procédé caractérisé en ce que l'on mélange sous agitation la phase aqueuse avec la phase organique tout en ajoutant les silicates d'aluminium, avec des forces de cisaillement de 10 à 7000 sec $^{-1}$, puis on ajoute le propulseur.

9. Procédé pour la fertilisation de plantes, caractérisé en ce que l'on pulvérise sur les plantes ou sur des parties des plantes un engrais selon l'une quelconque des revendications 1 à 8.

**Claims**

1. Fertilizing agents for spraying as an aerosol or spray consisting of an aequos phase containing the plant nutrient agents, an organic phase containing nonphytotoxic organic solvents and a propellant, characterized in that they contain one or more ($C_2$-$C_{12}$)alkanepolyols and one or more surface active substances and swelling aluminium-silicates.

2. Fertilizing agents according to claim 1, characterized in that they contain ($C_2$-$C_3$)alkanediols or ($C_2$-$C_5$)alkanetriols.

3. Fertilizing agents according to claim 1, characterized in that they contain optionally ethoxylated ($C_8$-$C_{12}$)alkylphenoles, condensation products from optionally alkylated phenoles with formaldehyde and/or bisulfite salts, ($C_6$-$C_{18}$)alkylsulfonic acids, ethoxylated oleic acids, optionally ethoxylated sorbitane-monooleates, mixtures of anionactive tensides with nonionic tensides, poly($C_2$-$C_3$)alkylenglycols or poly($C_2$-$C_3$)alkylenglycolmono($C_1$-$C_{10}$)alkylethers as surface active substances.

4. Fertilizing agents according to claims 1 to 3 characterized in that aluminium silicate minerals of the typ of the bentonites are used.

5. Fertilizing agents according to claims 1 to 4 characterized in that paraffins, petroleum fractions with a low aromatic content, plant oils or mixtures thereof are used as organic solvents.

6. Fertilizing agents according to claims 1 to 5 characterized in that a mixture of propane and butane is used as a propellant.

7. Fertilizing agents according to claims 1 to 6, characterized in that they contain 20 to 40 % b.w. water, 2 to 20 % b.w. of a solvent, 30 to 60 % b.w. of a propellant, 0.1 to 15 % b.w. of surface active agents plus a ($C_2$-$C_{12}$)alkanepolyol, 0.001 to 5 % b.w. of an aluminium silicate and 0.05 to 8 % b.w. of plant nutrient agents.

8. A process of preparing the fertilizing agents of claims 1 to 7 characterized by stirring the aqueous phase with the organic phase with addition of aluminium silicates by using a shearing power in the range of 10 to 7000 sec$^{-1}$ and thereafter adding the propellant.

9. A process for fertilizing plants characterized by spraying onto the plants or plant parts a fertilizing agent according to claims 1 to 8.